# EUROPÄISCHE PATENTANMELDUNG

(11) **EP 0 944 225 A2**
(43) Veröffentlichungstag der Anmeldung: **22.09.1999**
(21) Anmeldenummer: 99101309.5
(22) Anmeldetag: 25.01.1999
(51) Int. Cl.: H04M 3/50, H04M 3/60, H04M 3/42

(54) **Verfahren zur Handhabung einer Telekommunikationseinrichtung**

(30) Priorität: 18.03.1998 DE 19811726
(71) Anmelder: ROBERT BOSCH GMBH, 70442 Stuttgart (DE)
(72) Erfinder: Maldener, Nico-Johannes, 71229 Leonberg (DE); Glaser, Ulrich, 70499 Stuttgart (DE)

(57) **Zusammenfassung**

Die Erfindung betrifft ein Verfahren zur Handhabung einer Telekommunikationseinrichtung, mit einer manuell bedienbaren Benutzeroberfläche zur Vermittlung wenigstens einer ankommenden Kommunikationsverbindung zu wenigstens einem internen Teilnehmer, und mit einem bei einer manuellen Quittierung eine spezifische Programmreaktion auslösenden Fokus (Enter-/Return-Taste).

Es ist vorgesehen, daß die aus dem Fokus resultierenden Programmreaktionen in Abhängigkeit von Abläufen des Vermittlungsvorganges veränderlich sind.

## Beschreibung

Die Erfindung betrifft ein Verfahren zur Handhabung einer Telekommunikationseinrichtung mit den im Oberbegriff des Anspruchs 1 genannten Merkmalen.

### Stand der Technik

Bekannte Bedienoberflächen von Personal-Computern (sogenannten PC) weisen wenigstens einen Fokus auf, der bei Drücken einer bestimmten Taste eine bestimmte, durch das Programm vorgegebene Reaktion im Programm auslöst. Bei der Bedienoberfläche eines Windows®-Programmes ist üblicherweise die Return-Taste mit dem Fokus belegt, der üblicherweise auch nicht umprogrammiert, das heißt mit einer anderen Funktion belegt, werden kann. Der Fokus liegt somit immer auf der gleichen Funktion, kann jedoch vom Benutzer, beispielsweise durch Betätigen einer Tabulator-Taste, auf andere vorhandene Funktionen geleitet werden.

Bekannt sind zudem PC-gestützte Vermittlungsplätze für Telekommunikationseinrichtungen, die sich einer Windows®-Applikation bedienen. So ist beispielsweise bei dem bekannten Programm OSPC der Fa. Bosch-Telecom der übliche vermittlungstechnische Ablauf einer Arbeitskraft in einer Telefonzentrale weitgehend automatisiert, wodurch Vermittlungsvorgänge schnell und reibungslos abgearbeitet werden können.

Nachteilig an den bekannten Bedienoberflächen ist eine starre und nicht automatisierte Steuerung des Fokus. Die Vorauswahl des Fokus ist dabei im Programm implementiert und vom Benutzer nur durch mehrfache Tastendrücke veränderbar. Somit sind grundsätzlich deutlich mehr, meist immer gleichartig wiederkehrende, Bedienschritte notwendig, als von einem typischen Programmablauf her eigentlich erforderlich wären.

### Vorteile der Erfindung

Das erfindungsgemäße Verfahren zur Handhabung einer Telekommunikationseinrichtung weist den Vorteil auf, durch einen veränderlichen Fokus einer Bedienoberfläche eine Anpassung an typische Bedienabläufe eines Vermittlungsvorganges zu ermöglichen und damit eine signifikante Beschleunigung von Bedienabläufen zu realisieren. Dies kann in vorteilhafter Weise durch Positionierung des Fokus in Abhängigkeit eines Benutzerverhaltens erreicht werden, was entweder durch manuelle Eingabe eines typischen Bedienablaufes oder durch Aufrufen einer sogenannten Lernfunktion geschehen kann. In einer derartigen Lernfunktion wird in einer separaten Datei ein typischer Bedienablauf abgespeichert und kann sich den wechselnden Bedienmustern dynamisch anpassen. Hierdurch ist eine Anpassung an benutzerindividuelle Gewohnheiten bei der Bedienung ermöglicht. Durch eine automatische Fokussteuerung wird eine deutliche Verbesserung einer Arbeitsplatzergonomie erreicht.

Weitere vorteilhafte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: ein Ablaufdiagramm einer manuellen Fokusprogrammierung und
- Figur 2: ein Ablaufdiagramm einer automatischen Fokusprogrammierung.

### Beschreibung der Ausführungsbeispiele

Die folgende Beschreibung betrifft ein Beispiel einer automatischen Fokussteuerung einer Windows®-Bedienoberfläche für einen Vermittlungsplatz einer Telekommunikationseinrichtung. Unter einem Fokus wird in diesem Zusammenhang eine, auch optisch, hervorgehobene Stelle beziehungsweise Funktion der Bedienoberfläche verstanden, die bei Betätigung der RETURN-Taste wenigstens eine bestimmte, vom Programm vorgegebene Aktion auslöst. Beschrieben wird ein typischer Verlauf eines Vermittlungsvorganges, das heißt ein Abfragen und ein nachfolgendes Zuteilen einer Fernsprechverbindung beziehungsweise allgemeiner einer Kommunikationsverbindung.

Solange kein Anruf eingeht, befindet sich der Vermittlungsplatz zunächst in einem Zustand "Ruhe". Der Fokus steht hierbei auf einer Abfrageseite und als nächste Fokusposition ist ebenfalls die Abfrageseite zu erwarten. Sobald der Vermittlungsplatz einen Anruf erhält, springt der Fokus auf die Abfragetaste. Erfolgt nun ein Anruf, so ist bei auf einer Abfrageseite stehendem Fokus als Benutzereingabe ein Drücken der Return-Taste zu erwarten. Eine nächste Fokusposition ist damit sinnvollerweise auf eine Zuteiltaste zu verändern.

Nun ist zu erwarten, daß die Vermittlung den Anruf entgegennimmt. Der Vermittlungsplatzzustand ist somit durch ein abfrageseitiges Gespräch charakterisiert. Der Vermittlungsplatz hat das Gespräch auf der Abfrageseite und der Fokus springt auf die Zuteiltaste. Mit einer Fokusposition auf der Zuteiltaste ist als nächste Benutzereingabe wiederum ein Drücken der Return-Taste zu erwarten, als nächste Fokusposition eine Zuteilseite. Nun ist zu erwarten, daß das abfrageseitige Gespräch zugeteilt wird. Der Vermittlungsplatzzustand ist nunmehr wahlbereit hinsichtlich der Zuteilseite. Durch Drücken der RETURN-Taste erfolgt ein Wechsel auf die Zuteilseite. In diesem Zustand ist zu erwarten, daß die Vermittlungsperson über eine Tastatur einen Namen oder eine Rufnummer in das Programm eingibt, um eine Verbindung herzustellen. Durch Drücken der Return-Taste wird die Abfragefunktion ausgeführt. Befindet sich der Vermittlungsplatz dagegen nicht im Zustand "Ruhe", darf der Fokus nicht automatisch auf die Abfrage-Taste wechseln.

Wenn der Vermittlungsplatz ein Gespräch auf der Zuteilseite hat, springt der Fokus auf die Ende-Taste. Durch Drücken der Return-Taste wird die Verbindung auf der Abfrageseite der Zuteilseite zugeteilt. Abschließend befindet sich der Vermittlungsplatz wieder in Ruhe, der Fokus befindet sich auf der Abfrageseite.

Der normalerweise starre Fokus der Bedienoberfläche wird dadurch an die Abläufe beim Vermittlungsvorgang angepaßt. Je nach Aktion eines Benutzers reagiert der Fokus vorausschauend und stellt sich auf die nächste zu erwartende Aktion des Benutzers ein. Die notwendigen Tastendrücke für einen Vermittlungsvorgang werden dadurch deutlich reduziert.

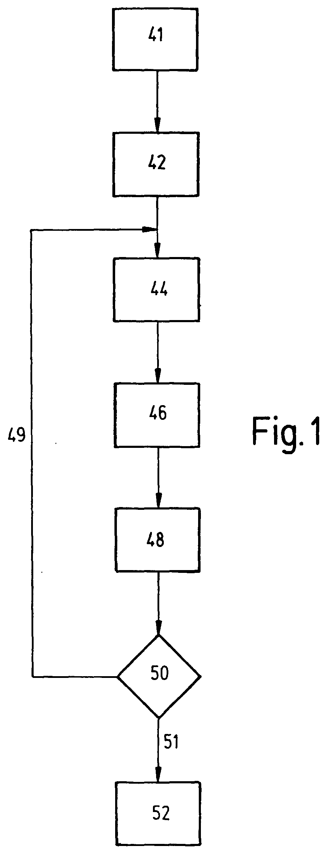

Figur 1 zeigt in einem Ablaufdiagramm eine weitere Ausbaustufe der Fokusanpassung. Hierbei wird dem Benutzer eine individuelle Programmierung der Fokusposition in Abhängigkeit seiner Eingabe ermöglicht. Die Fokuspositionen können hierfür in einer separaten Datei gespeichert werden. Die Programmierung der individuellen Fokusposition geschieht über einen Lernmodus des Programmes, wie im folgenden anhand der einzelnen Programmschritte in deren Reihenfolge beschrieben.

In einem ersten Programmschritt 41 (Start) wird der Programmiermodus zunächst gestartet und im folgenden Schritt 42 der Lernmodus aktiviert. In einem nächsten Schritt 44 wird ein Dialog für den zu programmierenden Fokus aufgerufen. Im nächsten Schritt 46 wird der Fokus manuell an die gewünschte Position geführt. Im darauf folgenden Schritt 48 wird die Fokusposition gespeichert. In einem Abfrageschritt 50 wird abgefragt, ob die Programmierung wiederholt werden soll.

Ist diese Abfrage positiv, geht das Programm in einem Rücksprung 49 zurück vor Schritt 44. Ist die Abfrage negativ, geht das Programm über Schritt 51 zum Schritt 52, in dem der Lernmodus deaktiviert wird. Der Rücksprung 49 kann solange wiederholt werden, bis alle gewünschten Fokusfunktionen implementiert sind. Auf diese Weise lassen sich die Mehrzahl der auftretenden Vermittlungsvorgänge hinsichtlich des zukünftig notwendigen Bedienungsaufwandes optimieren.

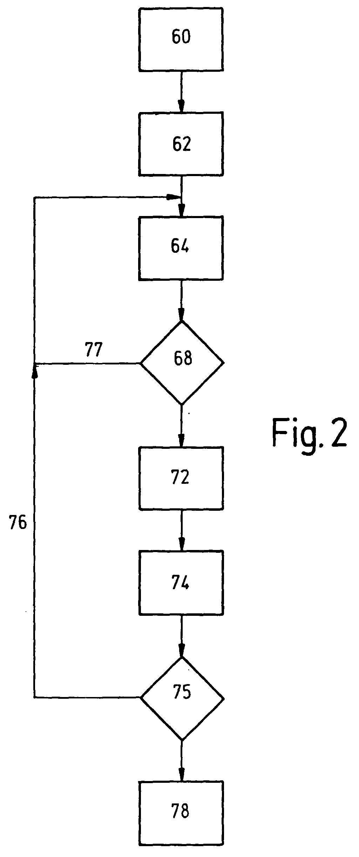

Figur 2 zeigt eine weitere Entwicklungsstufe der Fokusprogrammierung, die weitgehend automatisiert ist. Der Fokus kann sich hierbei im Laufe der Zeit durch Beobachten der Eingaben an die Benutzergewohnheiten anpassen. Die durch Beobachten und Überwachen von typischen Benutzereingaben gewonnenen Fokuspositionen werden in einer Datei gespeichert, können jedoch vom Benutzer jederzeit geändert werden.

In einem ersten Programmschritt 60 (Start) wird der Programmiermodus zunächst gestartet und im folgenden Schritt 62 ein automatischer Lernmodus aktiviert. Das Programm wird normal bedient (Schritt 64). Nach jedem Bedienschritt erfolgt eine Abfrage (Schritt 68), ob es sich bei der aktuellen Fokusposition um eine lernfähige Fokusposition handelt. Ist das Ergebnis dieser Abfrage negativ, springt das Programm in einem Rücksprung 77 zurück vor den Schritt 64.

Ist das Ergebnis der Abfrage in Schritt 68 positiv, erfolgt im nachfolgenden Schritt 72 eine Eintragung der aktuellen Fokusposition in eine dialogspezifische Tabelle. In einem nächsten Schritt 74 wird ein Maximalwert aus allen Fokuspositionen für den jeweiligen Dialog gebildet und als ein neuer Default-Wert für diese Situation abgespeichert. Nach dem Schritt 74 erfolgt eine Abfrage (Schritt 75), ob der automatische Lernmodus verlassen werden soll. Ist diese Abfrage positiv, wird in einem folgenden letzten Schritt 78 der automatische Lernmodus deaktiviert. Ist die Abfrage in Schritt 75 negativ, erfolgt ein Rücksprung 76 vor den Schritt 64. Die Abfrage in Schritt 68, ob es sich um eine lernfähige Fokusposition handelt, kann auf diese Weise beliebig oft wiederholt werden. Um eine höhere Ergonomie während der Lernfunktion zu erreichen, kann wahlweise auf die Abfragen 68 und 75 verzichtet werden.

## Patentansprüche

1. Verfahren zur Handhabung einer Telekommunikationseinrichtung, mit einer manuell bedienbaren Benutzeroberfläche zur Vermittlung wenigstens einer ankommenden Kommunikationsverbindung zu wenigstens einem internen Teilnehmer, und mit einem bei einer manuellen Quittierung eine spezifische Programmreaktion auslösenden Fokus (Enter-/Return-Taste), **dadurch gekennzeichnet,** daß die aus dem Fokus resultierenden Programmreaktionen in Abhängigkeit von Abläufen des Vermittlungsvorganges veränderlich sind.

2. Verfahren nach Anspruch 1, **dadurch gekennzeichnet,** daß der Fokus mit unterschiedlich sequentiell ablaufenden Funktionen belegbar ist.

3. Verfahren nach Anspruch 2, **dadurch gekennzeichnet,** daß die Funktionen des Fokus in Abhängigkeit von Benutzereingaben automatisch veränderlich sind.

4. Verfahren nach Anspruch 3, **dadurch gekennzeichnet,** daß ein "Lernmodus" des Fokus aktivierbar und deaktivierbar ist.

5. Verfahren nach Anspruch 4, **dadurch gekennzeichnet,** daß der Fokus im Lernmodus in Abhängigkeit von Benutzereingaben programmierbar ist.

6. Verfahren nach Anspruch 5, **dadurch gekennzeichnet,** daß der Fokus mehrere Zwischenzustände annehmen kann, die jeweils speicherbar sind.

7. Verfahren nach Anspruch 6, **dadurch gekennzeichnet,** daß der Fokus einen Zustand eines "automatischen Lernmodus" annehmen kann.

8. Verfahren nach Anspruch 7, **dadurch gekennzeichnet,** daß im "automatischen Lernmodus" eine ständige Programmabfrage nach "lernfähigen Fokuspositionen" erfolgt.

9. Verfahren nach Anspruch 8, **dadurch gekennzeichnet,** daß bei einer lernfähigen Fokusposition eine Eintragung der Fokuspositionen in eine dialogspezifische Tabelle erfolgt.

10. Verfahren nach Anspruch 9, **dadurch gekennzeichnet,** daß eine Abfrage eines Maximalwertes aus allen Fokuspositionen für einen bestimmten Dialog erfolgt.

11. Verfahren nach Anspruch 10, **dadurch gekennzeichnet,** daß der ermittelte Maximalwert jeweils als neuer Default-Wert für eine bestimmte Situation gespeichert wird.
